(19) **Europäisches Patentamt**
**European Patent Office**
**Office européen des brevets**

(11) **EP 3 065 096 A1**

(12) **EUROPEAN PATENT APPLICATION**

(43) Date of publication:
**07.09.2016 Bulletin 2016/36**

(51) Int Cl.:
**G06Q 10/10** *(2012.01)* **G06Q 50/14** *(2012.01)*

(21) Application number: **15290054.4**

(22) Date of filing: **03.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Amadeus S.A.S.**
**06410 Biot (FR)**

(72) Inventors:
- **Canis, Laure**
  **06300 Nice (FR)**
- **Florimond, Cedric**
  **06220 Vallauris (FR)**
- **Andrevon, Thibaud**
  **06220 Vallauris (FR)**

(74) Representative: **Samson & Partner Patentanwälte mbB**
**Widenmayerstraße 6**
**80538 München (DE)**

(54) **Manual review optimization for predictive fraud screening**

(57) Methods, systems, and computer program products for screening transactions. An estimated probability of fraud is used to determine an expected cost of fraud for accepting, denying, and ,manually reviewing a transaction. The action that provides the lowest expected cost of fraud is then chosen. Transactions selected for manual review are prioritized for review based on an expected reduction in the cost of fraud as compared to accepting the transaction without performing the review. Manual review capacity is adjusted to accommodate the expected number of transactions that have a higher reduction in cost of fraud than the opportunity cost of performing the manual review. To account for cases in which a transaction selected for manual review cannot be reviewed prior to the capture time, a probability is determined that the transaction will not be reviewed, and the cost of fraud for requesting the manual review adjusted thereon.

FIG. 1

**Description**

BACKGROUND

The invention generally relates to computers and computer systems and, in particular, to methods, systems, and computer program products that process transactions relating to the sale of travel services.

In the travel industry, airline tickets are often sold through an indirect seller, such as a travel agency. The indirect seller will typically check for available flights or other travel services that satisfy a traveler's travel plans and, once matching services are found, book the services for the traveler and collect payment. Payment is often collected by charging the cost of the travel services being purchased to a credit card account provided by the traveler, with the indirect seller or validating carrier acting as a merchant.

Credit card transactions typically comprise a two-stage process of authorization and settlement. At the time of the transaction, transaction information such as the purchase amount, identity of the merchant, credit card account number, and card expiration date, is transmitted from the merchant to an issuing bank. The issuing bank may then check the account to verify that the credit card is valid, and that the credit limit is sufficient to allow the transaction. If the bank approves the transaction, the merchant completes the transaction and issues a ticket to the traveler. To receive payment, the merchant may send a batch of approved authorizations to an acquiring bank at a capture time, which is typically at the close of the business day. The acquiring bank may then reconcile and transmit the authorizations to the issuing banks, typically via a card network or clearing house, and deposits funds in the merchant's account. Funds are then transferred from the issuing bank to the acquiring bank, and a bill sent to the cardholder by the issuing bank.

Unfortunately, credit cards are often used to fraudulently purchase airline tickets by unscrupulous individuals who utilize improperly obtained or stolen credit cards to make unauthorized purchases. When the true cardholder notices the unauthorized purchase, they may dispute the charge with the issuing bank. This typically results in a chargeback being issued to the merchant for the cost of the transaction. Since the ticket has typically been flown by the time the chargeback is received, the merchant is often liable for the cost of the travel service. The travel industry has proven very attractive to fraudsters. Fraud losses have been known to exceed several percent of net sales, and over 10% of earnings before taxes and interest in some cases. Moreover, the overall attempted fraud rate is expected to grow and fraudsters target merchants having weak fraud detection systems. Decreasing costs due to fraud is therefore of high importance for merchants in the travel industry.

Thus, improved systems, methods, and computer program products for processing transactions to detect fraud are needed to reduce the incidence of fraudulent charges and reduce losses incurred by merchants and travel service providers due to fraudulent purchases of travel services.

SUMMARY

In an embodiment of the invention, a method of processing transactions for which a manual review has been requested is provided. The method includes determining a first cost of fraud for accepting each transaction without manual review, and determining a second cost of fraud for manually reviewing each transaction. The method determines a difference between the first cost of fraud and the second cost of fraud for each transaction, and assigns a priority to each transaction that increases as the difference increases so that the transactions for which the difference is larger have a higher priority than the transactions for which the difference is smaller. Each transaction is then scheduled for manual review based on the priority of the transaction.

In another embodiment of the invention, a system for screening transactions is provided. The system includes a processor and a memory coupled to the processor. The memory includes instructions that, when executed by the processor, cause the system to determine the first cost of fraud for accepting each transaction without manual review and the second cost of fraud for manually reviewing each transaction. The instructions further cause the system to determine the difference between the first cost of fraud and the second cost of fraud for each transaction, and assign priority to each transaction that increases as the difference increases so that transactions for which the difference is larger have a higher priority than transactions for which the difference is smaller. The system then schedules each transaction for manual review based on the priority of the transaction.

In another embodiment of the invention, a computer program product is provided that includes a non-transitory computer-readable storage medium including instructions. The instructions may be configured, when executed by the processor, to cause the processor to determine the first cost of fraud for accepting each transaction without manual review and the second cost of fraud for manually reviewing each transaction. The instructions further cause the processor to determine the difference between the first cost of fraud and the second cost of fraud for each transaction, and assign priority to each transaction that increases as the difference increases so that transactions for which the difference is larger have a higher priority than transactions for which the difference is smaller. The processor then schedules each transaction for the manual review based on the priority of the transaction.

BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.

FIG. 1 is a diagrammatic view of an exemplary operating environment including a plurality of computing systems in communication via a network.
FIG. 2 is a diagrammatic view of an exemplary computing system of FIG. 1.
FIG. 3 is a diagrammatic view of a transaction processing system including a shopping module, a booking module, a manual review task manager module, a fraud screening module, and a transaction database.
FIG. 4 is a graphical view depicting a relationship between a cost of fraud and a probability of fraud for a transaction being processed by the transaction processing system of FIG. 3.
FIG. 5 is a flow chart of a process that may be performed by the transaction processing system of FIG. 3.
FIG. 6 is a flowchart of another process that may be performed by the transaction processing system of FIG. 3.
FIG. 7 is a graphical view depicting additional details of a portion of the graph of FIG. 3.
FIG. 8 is a flowchart of another process that may be performed by the transaction processing system of FIG. 3.

DETAILED DESCRIPTION

Embodiments of the invention are directed to methods and systems that determine whether to accept, deny, or request manual review of a transaction, such as a transaction to purchase a travel service, by determining a cost of fraud for the transaction. Embodiments of the invention may be implemented by a transaction processing system comprising one or more networked computers or servers. The networked computers may include a Global Distribution System (GDS), and may provide processing and database functions for travel-related systems and modules that analyze transactions for fraud.

In response to receiving a transaction, the transaction processing system may determine a cost of fraud for accepting the transaction without requesting a manual review, a cost of fraud for denying the transaction without requesting the manual review, and a cost of fraud for requesting the manual review. The transaction processing system may then determine whether to accept, deny, or request manual review of the transaction based on which choice provides the lowest cost of fraud. The transaction processing system may optimize the manual review process by prioritizing the order in which transactions are reviewed based on the difference in the cost of fraud between accepting the transaction and performing the manual review.

To determine an amount of resources to dedicate to performing manual reviews, the transaction processing system may determine an opportunity cost of performing the manual review. The transaction system may then determine an optimal capacity for manually reviewing received transactions where the manual review is expected to reduce the cost of fraud by more than the opportunity cost. The transaction processing system may account for transactions for which manual review is indicated, but for which capacity is unavailable, by adjusting the cost of fraud for manually reviewing the transaction. This adjustment may be based on a probability that the transaction will not receive manual review prior to a capture time.

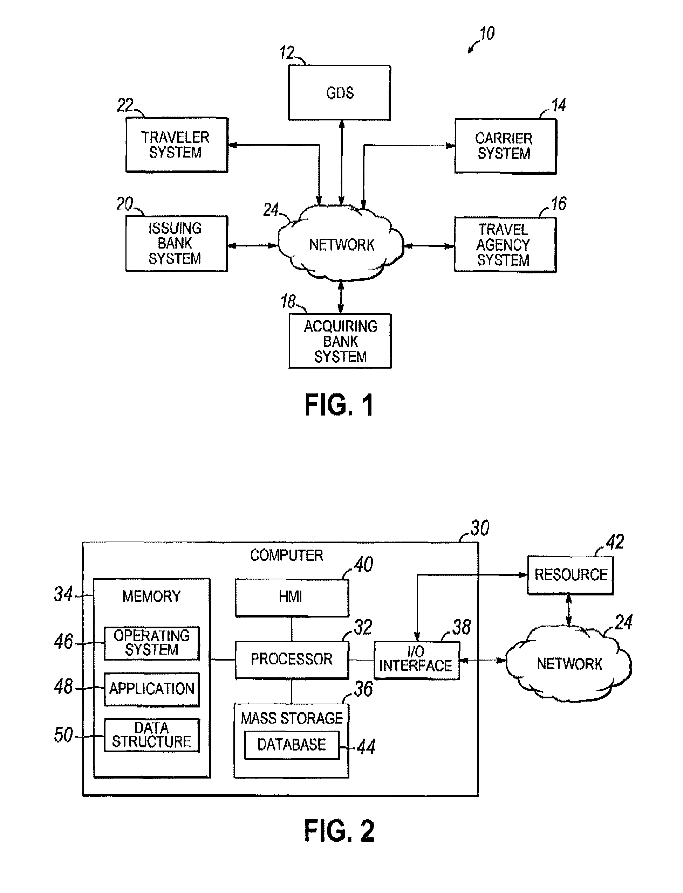

Referring now to FIG. 1, an operating environment 10 in accordance with an embodiment of the invention may include a Global Distribution System (GDS) 12, one or more travel service provider systems, such as carrier system 14, one or more indirect seller systems, such as travel agency system 16, an acquiring bank system 18, an issuing bank system 20, and a traveler system 22. Each of the GDS 12, carrier system 14, travel agency system 16, acquiring bank system 18, issuing bank system 20, and traveler system 22 may communicate through a network 24. The network 24 may include one or more private or public networks (e.g., the Internet) that enable the exchange of data.

The GDS 12 may be configured to facilitate communication between the carrier system 14 and travel agency system 16 by enabling travel agents, validating carriers, or other indirect sellers to book reservations on the carrier system 14 via the GDS 12. The GDS 12 may maintain links to a plurality of carrier systems via the network 24 that enable the GDS 12 to route reservation requests from the validating carrier or travel agency to a corresponding operating carrier. The carrier system 14 and travel agency system 16 may thereby book flights on multiple airlines via a single connection to the GDS 12.

The carrier system 14 may include a Computer Reservation System (CRS) that enables the GDS 12 or travel agency system 16 to reserve and pay for airline tickets. The carrier system 14 may also interact with other carrier systems (not shown), either directly or through the GDS 12, to enable a validating carrier to sell tickets for seats provided by the operating carrier. The operating carrier may then bill the validating carrier for the services provided.

The travel agency system 16, acquiring bank system 18, and issuing bank system 20 may be configured to exchange data necessary to execute the transaction. To this end, at the time of the transaction, the travel agency system 16 may transmit an authorization request to the issuing bank system 20. In response to receiving the authorization request, the issuing bank system 20 may verify the credit card account is valid, and that the account has a sufficient remaining credit to cover the amount of the transaction. The issuing bank system 20 may then transmit an authorization response to the travel agency system 16. This response may indicate that the transaction has been approved, declined, or may request additional information.

Once the transaction is complete, the travel agency system 16 may transmit data characterizing the transaction to the acquiring bank system 18. This data may be transmitted individually, or as part of a batch file, at the capture time $t_C$. The capture time $t_C$ may occur periodically, such as at end of the business day on which the transaction was conducted. The acquiring bank system 18 may then deposit funds into an account of the travel agency, and recover funds from the corresponding issuing banks of the credit cards used to purchase the travel services.

The traveler system 22 may comprise a desktop computer, laptop computer, tablet computer, smart phone, or any other suitable computing device. The traveler may use the traveler system 22 to search for and book travel services by accessing the GDS 12, carrier system 14, travel agency system 16, or any other suitable system though the network 24. For example, the traveler may launch a browser application, and use the browser application to search for travel services on a web-site provided by a travel services provider or reseller. The traveler may then book a selected travel service by entering payment information into the web site.

Referring now to FIG. 2, the GDS 12, carrier system 14, travel agency system 16, acquiring bank system 18, issuing bank system 20, and traveler system 22 of operating environment 10 may be implemented on one or more computer devices or systems, such as exemplary computer system 30. The computer system 30 may include a processor 32, a memory 34, a mass storage memory device 36, an input/output (I/O) interface 38, and a Human Machine Interface (HMI) 40. The computer system 30 may also be operatively coupled to one or more external resources 42 via the network 24 or I/O interface 38. External resources may include, but are not limited to, servers, databases, mass storage devices, peripheral devices, cloud-based network services, or any other suitable computer resource that may used by the computer system 30.

The processor 32 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 34. Memory 34 may include a single memory device or a plurality of memory devices including, but not limited to, read-only memory (ROM), random access memory {RAM), volatile memory, non-volatile memory, static random access memory (SRAM), dynamic random access memory (DRAM), flash memory, cache memory, or any other device capable of storing information. The mass storage memory device 36 may include data storage devices such as a hard drive, optical drive, tape drive, volatile or non-volatile solid state device, or any other device capable of storing information.

The processor 32 may operate under the control of an operating system 46 that resides in memory 34. The operating system 46 may manage computer resources so that computer program code embodied as one or more computer software applications, such as an application 48 residing in memory 34, may have instructions executed by the processor 32. In an alternative embodiment, the processor 32 may execute the application 48 directly, in which case the operating system 46 may be omitted. One or more data structures 50 may also reside in memory 34, and may be used by the processor 32, operating system 46, or application 48 to store or manipulate data.

The I/O interface 38 may provide a machine interface that operatively couples the processor 32 to other devices and systems, such as the network 24 or external resource 42. The application 48 may thereby work cooperatively with the network 24 or external resource 42 by communicating via the I/O interface 38 to provide the various features, functions, applications, processes, or modules comprising embodiments of the invention. The application 48 may also have program code that is executed by one or more external resources 42, or otherwise rely on functions or signals provided by other system or network components external to the computer system 30. Indeed, given the nearly endless hardware and software configurations possible, persons having ordinary skill in the art will understand that embodiments of the invention may include applications that are located externally to the computer system 30, distributed among multiple computers or other external resources 42, or provided by computing resources (hardware and software) that are provided as a service over the network 24, such as a cloud computing service.

The HMI 40 may be operatively coupled to the processor 32 of computer 30 in a known manner to allow a user to interact directly with the computer 30. The HMI 40 may include video or alphanumeric displays, a touch screen, a speaker, and any other suitable audio and visual indicators capable of providing data to the user. The HMI 40 may also include input devices and controls such as an alphanumeric keyboard, a pointing device, keypads, pushbuttons, control knobs, microphones, etc., capable of accepting commands or input from the user and transmitting the entered input to the processor 32.

A database 44 may reside on the mass storage memory device 36, and may be used to collect and organize data used by the various systems and modules described herein. The database 44 may include data and supporting data structures that store and organize the data. In particular, the database 44 may be arranged with any database organization or structure including, but not limited to, a relational database, a hierarchical database, a network database, or combinations thereof. A database management system in the form of a computer software application executing as instructions on the processor 32 may be used to access the information or data stored in records of the database 44 in response to a query, where a query may be dynamically determined and executed by the operating system 46, other applications 48, or one or more modules.

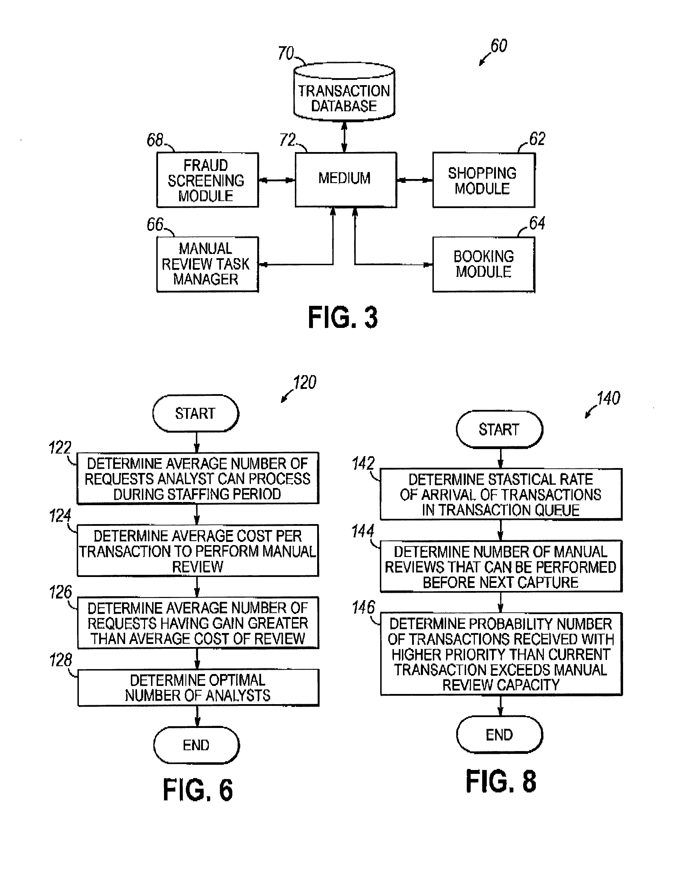

Referring now to FIG. 3, an exemplary transaction processing system 60 for selling travel services may include a shopping module 62, a booking module 64, a manual review task manager module 66, a fraud screening module 68, and a transaction database 70 that stores historical data relating to previous transactions. The shopping module 62, booking module 64, manual review task manager module 66, fraud screening module 68, and transaction database 70 may be provided by one or more suitable computing systems, and may be operatively coupled through a medium 72, such as a communication network or a shared memory space. Suitable computing systems may include, for example, the GDS 12, carrier system 14, travel agency system 16, traveler system 22, or any other suitable computer system, such as a system operated by a travel service provider or travel service re-seller.

Purchasing a travel service may comprise shopping for the travel service, pricing the travel service, and booking the travel service. The traveler may shop for travel services, for example, by accessing the shopping module 62 using the traveler system 22. The shopping module 62 may put the traveler in communication with a source of travel services such as an airline, railway, hotel, rental car, or travel services re-seller. For example, the shopping module 62 may provide access to a web-site for an on-line travel agency or a seller of travel services. This web-site may be accessed using a browser application operating on the traveler system 22, thereby enabling the traveler to shop for and purchase travel services.

In response to the traveler indicating a desire to book a travel service, the booking module 64 may price and check for availability of the service. If the requested services are available, the booking module 64 may reserve the services so that the provider inventory is adjusted to reflect the pending transaction. The traveler may then be presented with the priced travel itinerary and be asked to approve the transaction.

In response to the traveler approving the transaction, the booking module 64 may receive a transaction request. The transaction processing system 60 may accept the transaction and proceed to book the itinerary, decline the transaction, or request manual review of the transaction based on data from the fraud screening module 68. If a manual review is requested and indicates that the transaction is legitimate, the transaction processing system 60 may accept the transaction and cause the booking module 64 to complete the booking. If the manual review indicates the transaction is fraudulent, the transaction processing system 60 may decline the transaction. The initial decision to accept, refuse, or request manual review of the transaction may be made based on the cost of fraud $C_F$ for accepting the transaction $C_F(\text{accept})$, the cost of fraud $C_F$ for denying the transaction $C_F(\text{deny})$, or the cost of fraud $C_F$ for requesting manual review of the transaction $C_F(\text{review})$.

The cost of fraud $C_F$ for the transaction may be determined by the fraud screening module 68 based on a probability that the transaction is fraudulent, or probability of fraud $P$. For example, transactions having a probability of fraud $P$ below a lower threshold may be allowed, transactions having a probability of fraud $P$ above an upper threshold may be denied, and transactions with a probability of fraud $P$ above the lower threshold and below the upper threshold may be subjected to manual review.

The fraud screening module 68 may determine the probability of fraud $P$ for a new transaction based on characteristics of the transaction. The characteristics of the transaction used to determine the probability of fraud $P$ may be selected and processed based on historical data from previously accepted transactions stored in the transaction database 70. For example, characteristics of the transaction may be weighted and summed to produce the probability of fraud P based on historical correlations between the respective characteristics and transactions that proved to be fraudulent. Exemplary transaction characteristics may include the price of the transaction (e.g., tickets selling at high or undiscounted prices may have a higher probability of fraud), the length of the travel window (e.g., tickets purchased a short time before a flight may have a higher probability of fraud), whether the name of the cardholder matches the name of the traveler (e.g., third party purchases may have a higher probability of fraud), and origination-destination pair or markets (e.g., some markets may have higher rates of fraud than others). Multiple tickets being purchased using the same account number or purchased by a single traveler for different routes with same dates of travel may also be indicative of fraud.

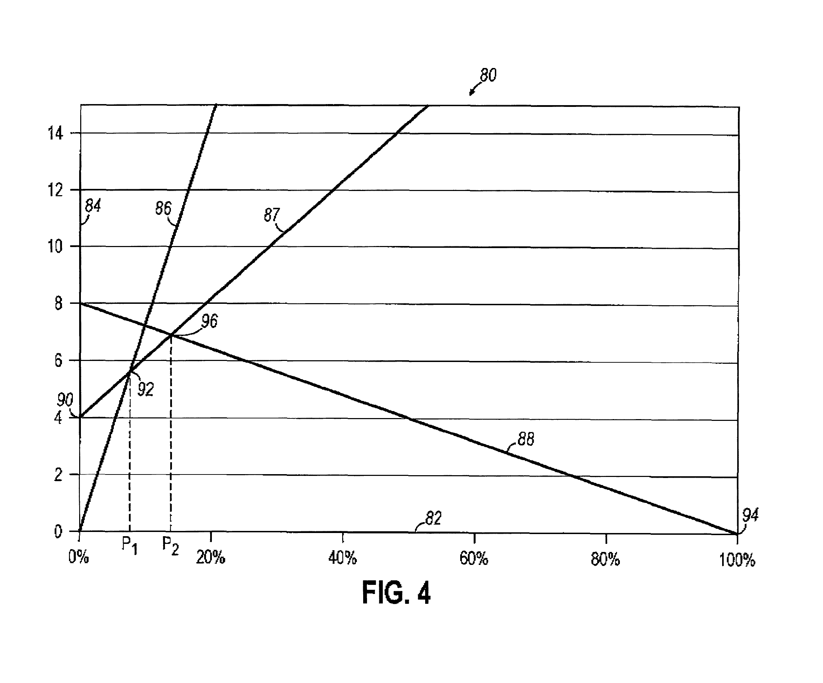

Referring now to FIG. 4, a graph 80 includes a horizontal axis 82 corresponding to the probability $P$ that the transaction is fraudulent, and a vertical axis 84 corresponding to the cost of fraud $C_F$ expected for accepting the transaction. Persons having ordinary skill in the art will understand that the scale of horizontal axis 82 and vertical axis 84 of graph 80 may be distorted in order to more clearly describe embodiments of the invention. The graph 80 includes three exemplary functions or curves 86-88. The functions represented by curves 86-88 may represent the cost of fraud $C_F$ with respect to the probability of fraud $P$ for different actions taken in response to receiving the transaction request.

The cost of fraud $C_F$ for accepting the transaction may be represented by curve 86. To this end, curve 86 may comprise a line corresponding to the merchant's liability $L$ times the probability of fraud $P$, so that $C_F = L \times P$. That is,

curve 86 may be defined by a line intersecting the vertical axis 84 at zero and having a slope = $L$, and may represent the cost of fraud $C_F$ versus probability of fraud $P$ for accepting the transaction without requesting manual review. In some cases, the merchant's liability $L$ may be equal to an amount $A$ of the transaction. The merchant's liability $L$ for a given transaction may also include expected costs of processing a chargeback, penalties for submitting a fraudulent transaction to the acquiring or issuing bank, generation and management of an Agency Debit Memo (ADM), and any other additional costs that may result from accepting a fraudulent transaction. Thus, curve 86 may reflect other expected costs of fraud in addition to the amount $A$ of the transaction.

The cost of fraud $C_F$ for transactions in which the transaction is subjected to manual review prior to accepting or denying the transaction may be represented by curve 87. Curve 87 may be based on the transaction being accepted if the manual review indicates the transaction is legitimate, and being denied if the manual review indicates the transaction is fraudulent. Performing the manual review may add additional costs to the transaction. These costs may include a cost per transaction charged by a firm providing the manual review, or costs associated with implementation of a manual review process, such as for purchasing computer systems, data connections, terminals, and paying fraud analysts.

The costs of performing the manual review may be reflected in the shape and location of curve 87. For example, the intersection of curve 87 and the vertical axis 84 at reference marker 90 may reflect the cost of performing a manual review. That is, because the expected cost of fraud $C_F$ for a transaction having a probability of fraud $P = 0\%$ may be $0.00, the cost of fraud at reference marker 90 may reflect an amortized cost of performing the manual review (e.g., $4.00 per transaction).

As probability of fraud $P$ increases, the cost of fraud $C_F$ for each transaction on which the manual review is performed, or $C_F$(review), may increase at a slower rate than the cost of fraud $C_F$ for accepting the transaction without requesting manual review, or $C_F$(accept). This may be due to the manual review identifying at least a portion of the fraudulent transactions. Denying fraudulent transactions identified by the manual review may reduce the number of fraudulent transactions accepted as compared to accepting the transactions without requesting manual review. Performing manual reviews may thereby reduce the average merchant liability L per transaction as compared to accepting transactions without manual review. This reduction may increasingly offset the cost of performing the manual review as the probability of fraud P increases so that curve 87 crosses curve 86 at intersection point 92, which corresponds to a probability of fraud $P_1$ in the exemplary graph 80.

The cost of fraud $C_F$ of denying a transaction, or $C_F$(deny), as depicted by curve 88, may represent the cost associated with lost sales from denying a legitimate transaction. Because revenue is not lost by denying a fraudulent transaction, curve 88 may provide a $C_F$(deny) = 0 for transactions having a probability of fraud $P = 100\%$. Thus, curve 88 may comprise a line that intersects the horizontal axis 82 at reference marker 94 (e.g., $P = 100\%$), and may be defined by $C_F$(deny) = $A \times (1 - P)$, so that the cost of fraud $C_F$(deny) = $A$ for denying a transaction having probability of fraud $P$ = 0%. The downward slope of curve 88 may cause curve 88 to intersect curve 87 at intersection point 96, which corresponds to a probability of fraud $P_2$ in the exemplary graph 80.

The difference in the cost of fraud $C_F$, or gain $G_{A-MR}$, provided by performing a manual review verses accepting the transaction may be provided by $C_F$(accept) - $C_F$(review). As can be seen from graph 80, the gain $G_{A-MR}$ may be negative to the left of intersection point 92, and positive to the right of intersection point 92. The difference in the cost of fraud $C_F$, or gain $G_{D-MR}$ provided by denying the transaction verses performing a manual review may be provided by $C_F$(deny) - $C_F$(review). As can be seen from graph 80, the gain $G_{D-MR}$ may be negative to the right of intersection point 96, and positive to the left of intersection point 96. Thus, both gains $G_{A-MR}$ and $G_{D-MR}$ may be positive for probabilities of fraud $P$ between $P_1$ and $P_2$.

The decision to accept, deny, or request manual review may depend on which curve 86-88 provides the lowest cost of fraud $C_F$ based on the estimated probability of fraud P for the transaction in question. As shown in the exemplary embodiment illustrated by FIG. 4, curve 86 intersects curve 87 at a probability of fraud $P = P_1$, and curve 87 intersects curve 88 at a probability of fraud $P = P_2$. Thus, in this illustrated embodiment, transactions having a probability of fraud $P$ of between 0 and $P_1$ may be accepted without requesting manual review. Transactions having a probability of fraud $P$ between $P_1$ and $P_2$ may have a manual review requested and the transaction accepted or denied based on the result of the manual review. Transactions having a probability of fraud $P > P_2$ may be denied. Persons having ordinary skill in the art will understand that the curves 86-88 are for exemplary purposes only. Embodiments of the invention are therefore not limited to exemplary curves 86-88 or the ranges and values depicted in FIG. 4.

If the transaction is accepted, the merchant may send a settlement request to the acquiring bank at the capture time $t_C$. The settlement request may be one of a plurality of settlement requests comprising batch file transmitted to the acquiring bank. In response to receiving the settlement request, the acquiring bank may initiate a transfer of funds between the traveler's account at the issuing bank and the merchant's account.

Travel services may be booked well in advance when the service is to be provided. This delay between booking and delivery of the travel service may provide a window of time during which the manual review of the transaction can be performed. Completing the manual review prior to the capture time $t_C$ may provide an advantage in that the settlement request may be withheld if the manual review indicates the transaction is fraudulent. This may allow the merchant to avoid triggering costs associated with receiving a chargeback, since withholding the request may prevent the issuing bank from billing of the account of the true cardholder.

If the number of requests for manual review exceeds the capacity of the fraud analysts to perform manual reviews, some of the requests may not be processed prior to the time by which the transaction must be denied. For example, if the manual review is not performed prior to use of the travel service, the transaction may be essentially accepted without manual review. In this case, the total cost of fraud $C_F$ may revert to the total cost of fraud for accepting the transaction $C_F$(accept). In cases where the number of manual reviews that would normally be requested exceeds the capacity to perform manual reviews, there may be a need to prioritize which transactions receive manual review. In addition, the number of transactions for which a manual review is indicated, and the improvement in the cost of fraud $C_F$ provided by performing the manual review, may be used to determine an optimal capacity for performing manual reviews. The amount of resources (e.g., the number of fraud analysts) that should be allocated to perform manual reviews may be determined based on this optimal capacity.

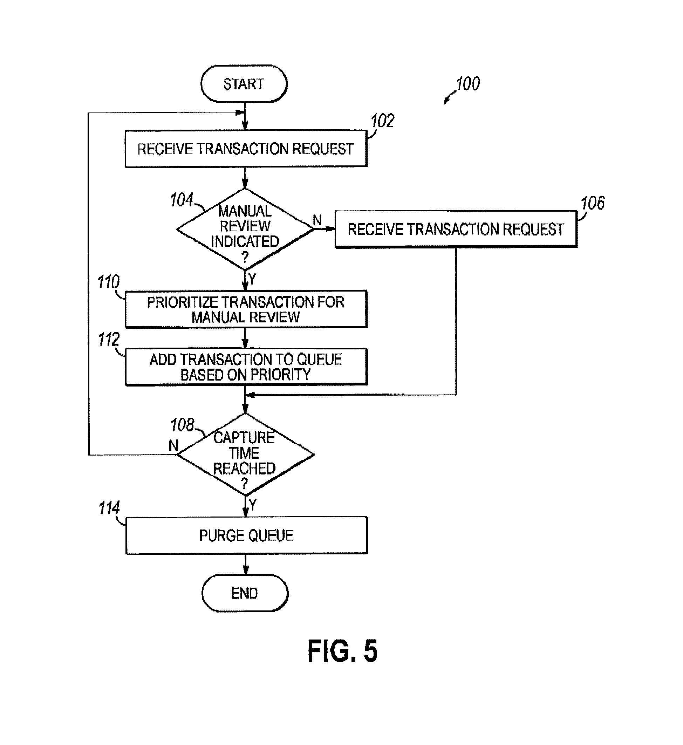

Referring now to FIG. 5, a flow chart depicts a process 100 for managing manual reviews that may be executed by the transaction processing system 60. In block 102, the process 100 may receive a transaction request. The transaction request may be, for example, a request to book a travel service, such as a flight. In response to receiving the transaction request, the process 100 may proceed to block 104 and determine if a manual review of the transaction is indicated. The manual review may be indicated, for example, if the cost of fraud $C_F$(review) is lower than either the cost of fraud $C_F$(accept) of accepting the transaction or the cost of fraud $C_F$(deny) of denying the transaction.

In response to the manual review not being indicated ("NO" branch of decision block 104), the process 100 may proceed to block 106. Manual review may not be indicated, for example, if ether of gains $G_{A-MR}$ and $G_{D-AM}$ are negative. In block 106, the transaction request may be accepted or declined based on the respective costs of fraud $C_F$(accept) and $C_F$(deny) without requesting the manual review. In either case, the process 100 may then proceed to block 108.

In response to the manual review being indicated ("YES" branch of decision block 104), the process 100 may proceed to block 110. Manual review may be indicated, for example, if gains $G_{A-MR}$ and $G_{D-MR}$ are both positive. In block 110, the process 100 may prioritize the transaction for manual review. Prioritizing the transaction may comprise determining the gain $G_{A-MR}$ for the transaction. The process 100 may then proceed to block 112, and add the transaction to a transaction queue by inserting the transaction at a location in the transaction queue based on the value of the gain $G_{A-MR}$. The transaction queue may be configured so that newly added transactions are inserted above transactions having a lower gain $G_{A-MR}$, and below transactions having a higher gain $G_{A-MR}$ than the transaction being added. Each transaction in the transaction queue may thereby be assigned a priority based on the gain $G_{A-MR}$ of the transaction.

In an alternative embodiment of the invention, the priority of the transactions in the queue may be further based on a time of arrival. In this embodiment, tasks having a similar gain $G_{A-MR}$ (i.e., a similar difference in the cost of fraud $C_F$), may be further prioritized based on their time of arrival at the queue. That is, the queue may be prioritized by decreasing gain $G_{A-MR}$, then by increasing time of arrival. Thus, transactions in the transaction queue having the same gain $G_{A-MR}$, or having gains $G_{A-MR}$ within a pre-determined range (e.g., $G_1 \leq G_{A-MR} \leq G_2$) may have their relative priority based on their time of arrival, with transactions having an earlier time of arrival having a higher priority.

In response to receiving a request for a transaction, such as from an analyst or a task management system, the un-reviewed transaction having the highest priority in the transaction queue may be selected and transmitted to a task inbox of the analyst assigned to manually review the transaction. The transaction processing system 60 may thereby assign transactions to analysts based on an expected value of performing the manual review so that tasks for which manual review is expected to provide the most-benefit are reviewed first. Transactions transmitted for review may be removed from the transaction queue, or marked as having been sent for review, so that un-reviewed transactions can be distinguished from tasks that have been reviewed, or are being reviewed.

In block 108, the process 100 may determine if the capture time $t_C$ has been reached. If the capture time $t_C$ has been reached ("YES" branch of decision block 108), the process 100 may proceed to block 114 and purge the transaction queue. Purging the transaction queue may comprise deleting any transaction that has reached or exceeded its capture time $t_C$. This may include all transactions for which a settlement request has been transmitted to the acquiring bank. If the capture time $t_C$ has not been reached ("NO" branch of decision block 108), the process may return to block 102 and receive another transaction request. Prioritizing manual reviews based on value of the gain $G_{A-MR}$ may impact the amount of resources that should be dedicated to manually reviewing transactions, and may reduce the number of analysts needed to process manual reviews as compared to systems that lack this prioritization feature.

Referring now to FIG. 6, a flow chart depicts a process 120 for determining an optimal number of analysts that may be executed by the manual review task manager module 66. In block 122, the process 120 may determine an average number of manual reviews $MR_P$ that can be processed by an analyst during a staffing period. The staffing period may represent any suitable period of time for determining these averages, such as a pay-period or shift of the analyst, and may have a duration or period $t_P$. Using analyst shifts as the staffing period may allow staffing levels to be adjusted based on diurnal or weekly variations in the number of requests for manual review received. The average number of manual reviews $MR_P$ may be determined using historical data relating to how many manual reviews the analysts have processed during previous staffing periods.

In block 124, the process 120 may determine an average cost per transaction $C_{AVG}$ to manually review the transaction. The average cost per transaction $C_{AVG}$ may be based on an opportunity cost of reviewing the transaction. To determine the average cost per transaction $C_{AVG}$, the process 120 may determine a loaded salary cost $C_S$ of an analyst over the staffing period. The average cost per transaction $C_{AVG}$ over the staffing period may then be determined using the following equation:

$$C_{AVG} = \frac{C_S}{MR_P} \times (1 + ROI)$$

where *ROI* represents an expected or desired return on investment.

Including the *ROI* parameter may allow the process 120 to determine an incremental value of using a resource to perform manual reviews as compared to other tasks. In an embodiment of the invention, the average cost per transaction $C_{AVG}$ may be determined using an expected return on investment of 0%, in which case $C_{AVG}$ may be determined using the following equation:

$$C_{AVG} = \frac{C_S}{MR_P}$$

The process 120 may proceed to block 126 and determine an average number of requests for manual review $MR_G$ received during a staffing period $t_P$ for which the gain $G_{A-AR} > C_{AVG}$. By using the average cost per transaction $C_{AVG}$ as a threshold for determining whether the manual review should be processed, the number of analysts dedicated to processing manual reviews may be selected so that the cumulative value the analysts create outweighs the opportunity cost of the analysts.

The process 120 may then proceed to block 128 and determine an optimal number of analysts. The optimal number of analysts *M* may be determined based on the average number of requests for manual review $MR_G$ meeting the gain threshold requirement, and the average number of manual reviews $MR_P$ an analyst can process during the staffing period as follows:

$$M = \frac{MR_G}{MR_P}$$

The process 120 may thereby adjust staffing levels so that analysts review transactions having a sufficient gain $G_{A-MR}$ to outweigh the opportunity costs of using the analyst for another task.

The actual number of requests for manual review $MR_A$ meeting the gain requirement that are received during a particular staffing period $t_P$ may deviate from the average number $MR_G$ from one staffing period to the next. During staffing periods in which the actual number of requests for manual review $MR_A$ is higher than the average number of manual reviews requested $MR_G$, the analysts may not be able to manually review all of the transactions prior to the capture time $t_C$. This possibility may alter the determination as to whether manual review should be requested for the transaction, or the transaction should be accepted or denied without requesting manual review.

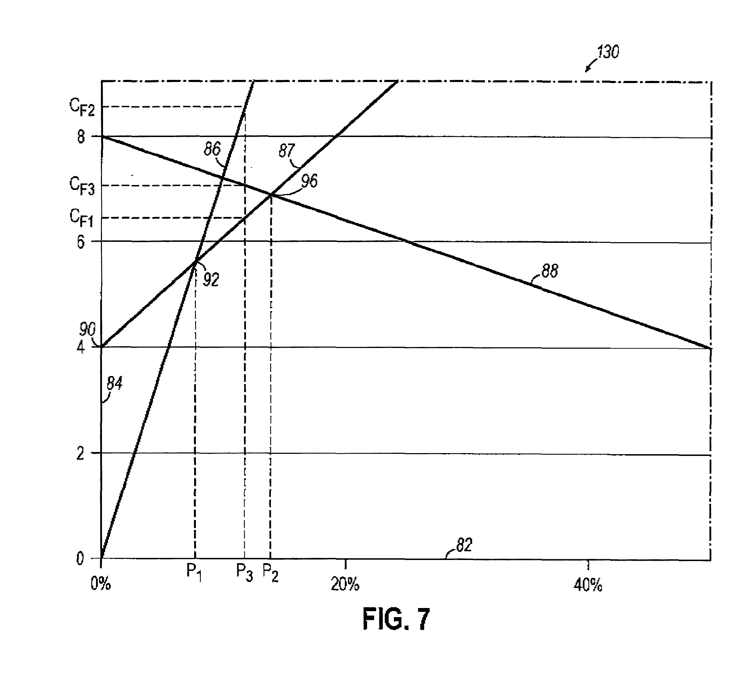

Referring now to FIG. 7, a graph 130 depicting a portion of the graph 80 of FIG. 4 is presented showing additional details of the curves 86-88 in the vicinity of the intersection points 92, 96. For a transaction having a probability of fraud $P = P_3$, the lowest cost of fraud $C_F$ may be provided by the cost of fraud $C_F$(review) of performing a manual review, or $C_{F1}$. However, if the manual review is requested but not performed by the capture time $t_C$, the decision may essentially default to acceptance of the transaction. As shown by the exemplary graph 130, failure to perform the manual review may result in the cost of fraud being $C_{F2}$ rather than $C_{F1}$.

As can be seen by the relative positions of $C_{F1}$, $C_{F2}$, and $C_{F3}$ on vertical axis 84, in the specific example depicted, the cost of fraud for performing a manual review $C_F$(review) provides the lowest cost of fraud $C_F = C_{F1}$ for a probability of fraud $P_3$. However, because the cost of fraud for denying the transaction $C_{F3}$ is less than the cost of fraud for accepting the transaction $C_{F2}$, if there is insufficient capacity to perform a manual review on the transaction prior to the capture time $t_C$, it may be advantageous to reject the transaction rather than request manual review. Thus, if it can be determined that the manual review cannot be performed, it may be preferable to deny the transaction rather than request manual review.

In cases where it is not possible to determine that the requested manual review will not be performed prior to the capture time $t_C$, it may be possible to determine a probability $P_{NR}$ that the manual review will not be performed. To take into account this probability $P_{NR}$, the cost of fraud may be adjusted using the following equation:

$$C_{FA}(\text{review}) = P_{NR} \times C_F(\text{accept}) - (1 - P_{NR}) \times C_F(\text{review})$$

where $C_{FA}(\text{review})$ is the adjusted total cost of fraud of performing manual review. That is, the probability that the manual review will not be performed $P_{NR}$ may be taken into account by altering the configuration of curve 87 based on the value of the probability $P_{NR}$. The transaction processing system 60 may then decide how to proceed as described above by comparing $C_F(\text{accept})$, $C_{FA}(\text{review})$, and $C_F(\text{deny})$, and selecting the decision that provides the lowest cost of fraud $C_F$.

Referring now to FIG. 8, a flowchart depicts a process 140 for determining the probability $P_{NR}$ that the manual review will not be performed on a transaction $T_X$ having a gain $G_{A-MR} = V$ and a time until capture $t_{UC} = t_0 - t_{C1}$, where $t_0$ is the current time. Manual review of $T_X$ may not be performed by $t_{C1}$ if more new transactions with gain $G_{A-MR} > V$ arrive between $t_0$ and $t_{C1}$ than can be processed by the available analysts. That is, if the number of transactions $N$ having a higher priority than the current transaction $T_X$ arriving in the interval $t_0$ to $t_{C1}$ exceeds the capacity of the analysts to perform manual reviews, the current transaction $T_X$ may not receive manual review. Thus, the probability $P_{NR}$ that the manual review will not be performed may be equal to the probability that $N$ exceeds the capacity of the analysts to perform manual reviews.

In block 142, the process 140 may determine an expected rate of arrival $\lambda(V, t)$ of transactions having a gain $G_{A-MR}$ greater than V. The rate of arrival $\lambda(V, t)$ may be a Poisson process, and may be determined statistically based on historical transaction data by:

$$\lambda(V,t) = \sum_{W=V}^{G_{MAX}} \lambda(W,t)$$

where the maximum gain $G_{MAX}$ is the gain $G_{A-MR}$ corresponding to the highest probability of fraud P for which a manual review would be requested. $G_{MAX}$ may correspond to, for example, the gain $G_{A-MR}$ corresponding to a probability of fraud $P$ above which transactions are denied rather than manually reviewed. By way of example, $G_{MAX}$ may be given by the gain $G_{A-MR}$ for a probability of fraud $P = P_2$ in exemplary graph 130.

In block 144, the process 140 may determine the number of transactions $N^*$ that can be manually reviewed before the capture time $t_{C1}$. $N^*$ may be determined based on an average amount of time $t_R$ required to perform a manual review, and the amount of time left until the capture time $t_{C1}$. The average amount of time required to perform a manual review $t_R$ may be related to the average number of manual reviews $MR_P$ that can be processed by an analyst during the staffing period as follows:

$$t_R = \frac{t_P}{MR_P}$$

where $t_P$ is the duration of the staffing period. In any case, $N^*$ may be provided by:

$$N^* = \frac{t_{C1} - t_0}{t_R}$$

In block 146, the process 140 may determine a probability $P_N$ that the number of transactions $N$ with gain $G_{A-MR} > V$ received during the interval $t_0$ to $t_{C1}$ is greater than $N^*$. The probability $P$ of $k$ transactions being received over the period of time from to to $t_0 + \tau$ may be provided by:

$$P[N(t_0 + \tau) - N(t_0) = k] = \frac{e^{-\lambda} \times \lambda^k}{k!}$$

where the rate $\lambda$ of the Poisson process is determined based on an expected number of additional transactions received between the current time to and the capture time $t_{C1}$, as provided by:

$$\lambda = \int_{t_0}^{t_0+\tau} \lambda(V,t)$$

In turn, the probability $P_{NR}$ that the manual review will not be performed on transaction $T_X$ may be provided by:

$$P_{NR} = \sum_{k=N^*}^{N_{MAX}} \frac{e^{-\lambda} \times \lambda^k}{k!}$$

where $N_{MAX}$ is the maximum number of transactions that could be received between $t_0$ and $t_{C1}$.

In an alternative embodiment of the invention, the value of $N^*$ may be adjusted downward by the number of un-reviewed transactions $N_{UR}$ in the transaction queue having a gain $G_{A-MR} > V$. In this alternative embodiment, $k$ may be set equal to $N^* - N_{UR}$ to account for the manual review capacity that will be consumed by un-reviewed transactions in the queue at the time transaction $T_X$ arrives. The probability $P_{NR}$ that the manual review will not be performed on transaction $T_X$ may then be provided by:

$$P_{NR} = \sum_{k=N^*-N_{UR}}^{N_{MAX}} \frac{e^{-\lambda} \times \lambda^k}{k!}$$

The program code embodying any of the embodiments of the invention described herein is capable of being individually or collectively distributed as a program product in a variety of different forms. In particular, the program code may be distributed using computer-readable media, which may include computer-readable storage media and communication media. Computer-readable storage media, which are inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer-readable instructions, data structures, or other program modules. By way of example, and not limitation, communication media may include wired media such as a wired network or direct-wired connection, and wireless media such as acoustic, RF, infrared and other wireless media. Combinations of any of the above may also be included within the scope of computer-readable media.

The methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions/acts specified herein.

In addition, program code described herein may be identified based upon the application or software component within which the program code is implemented in a specific embodiment of the invention. However, it should be appreciated that any particular program nomenclature that follows is used merely for convenience, and thus the invention should not be limited to use solely in any specific application identified or implied by such nomenclature. It should be further appreciated that the various features, applications, and devices disclosed herein may also be used alone or in any combination. Moreover, given the typically endless number of manners in which computer programs may be organized into routines, procedures, methods, modules, objects, and the like, as well as the various manners in which program functionality may be allocated among various software layers that are resident within a typical computing system (e.g., operating systems, libraries, APIs, applications, applets, etc.), or across one or more hardware platforms, it should be appreciated that the invention is not limited to the specific organization and allocation of program functionality described herein.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" or "comprising," when used in this specification, specify the presence of stated features, integers, steps, operations, elements, or components, but do not preclude the presence or addition of one or more other features, integers, steps, operations, elements, components, or groups thereof. Furthermore, to the extent that the terms "includes", "having", "has", "with", "comprised of", or variants thereof are used in either the detailed description or the claims, such terms are intended to be inclusive in a manner similar to the term "comprising."

While embodiments of the invention have been illustrated by a description of various examples, and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described. Accordingly, departures may be made from such details without departing from the spirit or scope of applicant's general inventive concept.

**Claims**

1. A method comprising:

   receiving, at a computer, a request for a manual review for each of a plurality of transactions;
   determining, by the computer, a first cost of fraud for accepting each transaction without the manual review;
   determining, by the computer, a second cost of fraud for manually reviewing each transaction;
   determining, by the computer, a difference between the first cost of fraud and the second cost of fraud for each transaction;
   assigning, by the computer, a priority to each transaction that increases as the difference increases so that the transactions for which the difference is larger have a higher priority than the transactions for which the difference is smaller; and
   scheduling, by the computer, each transaction for the manual review based on the priority of the transaction.

2. The method of claim 1 wherein each transaction has a time of arrival, and assigning the priority to each transaction comprises:

   determining the priority based on the time of arrival so that a first transaction having an earlier time of arrival than a second transaction and a similar difference to the second transaction has the higher priority than the second transaction.

3. The method of claim 1 or claim 2 wherein each transaction has a capture time, and further comprising:

   deleting each transaction for which the capture time has passed.

4. The method of claim 3 wherein the transactions for which the capture time has passed are deleted as a batch at predetermined intervals.

5. The method of claim 1 or claim 2 further comprising:

   receiving a new transaction;
   determining a first probability that, if the manual review is requested for the new transaction, the new transaction will not receive the manual review; and
   determining an adjusted second cost of fraud for the new transaction based on the first probability.

6. The method of claim 5 further comprising:

   determining the first cost of fraud for accepting the new transaction and a third cost of fraud for denying the new transaction;
   requesting the manual review of the new transaction if the adjusted second cost of fraud is lower than both the first cost of fraud for accepting the new transaction and the third cost of fraud for denying the new transaction; and

either rejecting or accepting the new transaction without requesting the manual review if the adjusted second cost of fraud is not lower than both the first cost of fraud for accepting the new transaction and the third cost of fraud for denying the new transaction.

7. The method of claim 5 or claim 6 wherein adjusting the second cost of fraud for the new transaction comprises:

determining a first product by multiplying the first cost of fraud for the new transaction by the first probability;
determining a second probability that, if the manual review is requested for the new transaction, the new transaction will receive the manual review by subtracting the first probability from unity;
determining a second product by multiplying the second cost of fraud for the new transaction by the second probability; and
summing the first product and the second product to generate the adjusted second cost of fraud.

8. The method of any of claims 5 to 7 wherein the new transaction has a capture time, and further comprising:

determining a first number of the transactions that can be manually reviewed before the capture time of the new transaction,
wherein the first probability is a probability that a second number of the transactions will exceed the first number of the transactions, the second number of the transactions comprising additional transactions arriving before the capture time for which the difference is greater than the difference of the new transaction.

9. The method of claim 8 wherein the second number of the transactions further comprises one or more un-reviewed transactions received prior to receiving the new transaction and for which the difference is greater than the difference of the new transaction.

10. The method of claim 8 or claim 9 wherein determining the first probability comprises:

for each value of the second number of the transactions from one of the transactions to the first number of the transactions, determining a third probability that the second number of the transactions will arrive prior to the capture time using a Poisson process;
determining a fourth probability that the second number of the transactions will not exceed the first number of the transactions by summing the third probabilities; and
determining the first probability by subtracting the fourth probability from unity.

11. The method of claim 10 wherein the Poisson process has a rate based on an expected number of additional transactions that will be received between a current time and the capture time.

12. The method of any of claims 1 to 11 further comprising:

determining a first average number of requests to manually review a transaction that an analyst can process during a staffing period;
determining an average cost per transaction to manually review the transactions;
determining a second average number of requests to manually review a new transaction having the difference greater than the average cost per transaction that are received during the staffing period; and
determining an optimal number of analysts for the staffing period based on the first average number of requests and the second average number of requests.

13. A system comprising:

a processor; and
a memory including instructions that, when executed by the processor, cause the system to:

receive a request for a manual review for each of a plurality of transactions;
determine a first cost of fraud for accepting each transaction without the manual review;
determine a second cost of fraud for manually reviewing each transaction;
determine a difference between the first cost of fraud and the second cost of fraud for each transaction;
assign a priority to each transaction that increases as the difference increases so that the transactions for which the difference is larger have a higher priority than the transactions for which the difference is smaller;

and

schedule each transaction for the manual review based on the priority of the transaction.

14. The system of claim 13 wherein the instructions, when executed by the processor, cause the system to perform the method of any of claims 2 to 12.

15. A computer program product for screening transactions for which a manual review has been requested, the computer program product comprising:

a non-transitory computer-readable storage medium; and
instructions stored on the non-transitory computer-readable storage medium that, when executed by a processor, cause the processor to:

determine a first cost of fraud for accepting each transaction without the manual review;
determine a second cost of fraud for manually reviewing each transaction;
determine a difference between the first cost of fraud and the second cost of fraud for each transaction;
assign a priority to each transaction that increases as the difference increases so that the transactions for which the difference is larger have a higher priority than the transactions for which the difference is smaller; and
schedule each transaction for the manual review based on the priority of the transaction.

**FIG. 1**

**FIG. 2**

*70*

TRANSACTION
DATABASE

*60*

*68*

FRAUD
SCREENING
MODULE

*72*

MEDIUM

*62*

SHOPPING
MODULE

*66*

MANUAL
REVIEW TASK
MANAGER

*64*

BOOKING
MODULE

**FIG. 3**

*120*

START

*122*
DETERMINE AVERAGE NUMBER OF
REQUESTS ANALYST CAN PROCESS
DURING STAFFING PERIOD

*124*
DETERMINE AVERAGE COST PER
TRANSACTION TO PERFORM MANUAL
REVIEW

*126*
DETERMINE AVERAGE NUMBER OF
REQUESTS HAVING GAIN GREATER
THAN AVERAGE COST OF REVIEW

*128*
DETERMINE OPTIMAL
NUMBER OF ANALYSTS

END

**FIG. 6**

*140*

START

*142*
DETERMINE STASTICAL RATE
OF ARRIVAL OF TRANSACTIONS
IN TRANSACTION QUEUE

*144*
DETERMINE NUMBER OF MANUAL
REVIEWS THAT CAN BE PERFORMED
BEFORE NEXT CAPTURE

*146*
DETERMINE PROBABILITY NUMBER
OF TRANSACTIONS RECEIVED WITH
HIGHER PRIORITY THAN CURRENT
TRANSACTION EXCEEDS MANUAL
REVIEW CAPACITY

END

**FIG. 8**

FIG. 4

**FIG. 5**

**FIG. 7**

EP 3 065 096 A1

Europäisches
Patentamt

European
Patent Office

Office européen
des brevets

## EUROPEAN SEARCH REPORT

Application Number

EP 15 29 0054

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br><br>----- | | INV.<br>G06Q10/10<br>G06Q50/14 |

TECHNICAL FIELDS
SEARCHED      (IPC)

G06Q

The present search report has been drawn up for all claims

| Place of search | Date of completion of the search | Examiner |
|---|---|---|
| The Hague | 12 August 2015 | Falierou, Christina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

        ................................................................
& : member of the same patent family, corresponding
    document

EPO FORM 1503 03.82 (P04C01)